(19)

Europäisches
Patentamt
European
Patent Office
Office européen
des brevets

(11) **EP 2 874 363 A1**

(12) **EUROPEAN PATENT APPLICATION**

(43) Date of publication:
20.05.2015 Bulletin 2015/21

(51) Int Cl.:
*H04L 25/03* (2006.01)      *H04L 27/00* (2006.01)
*H04L 27/26* (2006.01)      *H04L 5/00* (2006.01)

(21) Application number: 13306556.5

(22) Date of filing: 14.11.2013

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Wild, Thorsten
70435 Stuttgart (DE)**
• **Schaich, Frank
70435 Stuttgart (DE)**

(74) Representative: **Kleinbub, Oliver et al
Alcatel-Lucent Deutschland AG
Lorenzstr. 10
70435 Stuttgart (DE)**

(54) **A method for allocating a pilot sequence comprising cancellation carriers for sidelobe reduction**

(57)    The invention concerns a method for allocating a pilot sequence, a reference sequence, or a training sequence (SP1, SP2) on frequency resources which are predefined for usage of the pilot sequence, the reference sequence, or the training sequence (SP1, SP2), wherein the pilot sequence, the reference sequence, or the training sequence (SP1, SP2) is composed of at least two parts (SP1, SP2), a first part (SP1) of said at least two parts comprises at least one of a group of pilot symbols, reference symbols, and training symbols like a CAZAC sequence and a second part (SP2) of said at least two parts located at the edges of the allocated spectrum (Guard Band) comprises cancellation symbols or cancellation carriers located at the edge of said frequency resources for cancellation of sidelobes of the pilot sequence, the reference sequence, or the training sequence (SP1, SP2), and a network device therefor.

Fig. 5

EP 2 874 363 A1

## Description

## Field of the invention

The invention relates to a method for allocating at least one of a group of a pilot sequence, a reference sequence, and a training sequence on frequency resources, and a network device adapted to perform said method.

## Background

Multi-carrier wireless communication systems suffer from high out-of-band radiation due to high sidelobes of modulated subcarriers. E.g. for the pilot symbols of a 3GPP LTE system (3GPP = Third Generation Partnership Project; LTE = Long Term Evolution), this means that sidelobes of an Orthogonal Frequency Division Multiplexing (OFDM) system sine-spectrum are leaking into pilot resource elements of neighbour users. This pilot inter carrier interference (ICI) reduces channel estimation quality and thus the overall receiver performance.

## Summary

In such multi-carrier wireless communication systems, the following aspects are important:

- An operation in fragmented bands, e.g. using carrier aggregation, is likely to occur.
- An ability to relax synchronicity constraints, e.g. for machine-type communication (MTC), dealing with timing and frequency offsets must be provided. Furthermore, timing offsets also occur in coordinated multi-point (CoMP) due to propagation delay differences across multiple cells.

Thus, signal formats with low out-of-band radiation are desirable. More important, a pilot, reference, or training sequence design is aimed which reduces out-of-band radiation and thus avoids causing inter-carrier interference (ICI) to frequency-neighbored multi-carrier resource elements.

Thus, the invention aims at enabling a future wireless communication system, as e.g. a 5th generation multi-carrier wireless communication system, by providing appropriate pilot, reference, or training sequences.

The objective of the invention is to provide a design framework for pilot, training, or reference sequences, which ensures low out-of-band radiation and, at the same time, upkeep important pilot, reference or training sequence properties, like constant-amplitude zero-autocorrelation (CAZAC), which are very helpful for timing and frequency offset estimation. Reference sequences in this context comprise e.g. so-called cell specific reference signals. Those reference sequences are known at both ends of the link, so that the receiver can make use of them, e.g. for channel estimation, time/frequency synchronization etc. For multicarrier systems they may consist of complex valued symbols, so-called pilot symbols, mapped onto particular resource elements, thus particular subcarriers of particular OFDM symbols, reserved for training purposes.

A further target of the invention is the improvement of channel estimation quality in the presence of impairments.

A basic idea of the invention is to compose the pilot, reference, or training sequence of at least two parts, thus enabling the pilot, reference, or training sequence to fulfill requirements of ICI reduction. The first part comprises a conventional sequence with e.g. all desired autocorrelation properties like constant-amplitude zero-autocorrelation (CAZAC). The second part comprises sidelobe cancellation symbols which reduce the sidelobe levels of the multi-carrier signal containing first and second sequence parts.

The object of the invention is thus achieved by a method for allocating at least one of a group of a pilot sequence, a reference sequence, and a training sequence on frequency resources which are predefined for usage of said at least one of the group of the pilot sequence, the reference sequence, and the training sequence, wherein

- said at least one of the group of the pilot sequence, the reference sequence, and the training sequence is composed of at least two parts,
- a first part of said at least two parts comprises at least one of a group of pilot symbols, reference symbols, and training symbols,
- and a second part of said at least two parts comprises cancellation symbols located at the edge of said frequency resources for cancellation of sidelobes of said at least one of the group of the pilot sequence, the reference sequence, and the training sequence.

The object of the invention is furthermore achieved by network device for allocating at least one of a group of a pilot sequence, a reference sequence, and a training sequence on frequency resources which are predefined for usage of said at least one of the group of the pilot sequence, the reference sequence, and the training sequence, wherein said network device is adapted to

- compose said at least one of the group of the pilot sequence, the reference sequence, and the training sequence of at least two parts,
- with a first part of said at least two parts comprising at least one of a group of pilot symbols, reference symbols, and training symbols,
- and with a second part of said at least two parts comprising cancellation symbols located at the edge of said frequency resources for cancellation of sidelobes of said at least one of the group of the pilot sequence, the reference sequence, and the training sequence.

The invention is described in the following within the framework of 3GPP LTE, however as the invention is not restricted to 3GPP LTE or enhancements thereof as e.g. a $5^{th}$ generation multi-carrier wireless communication system, but can in principle be applied in other networks that use scheduling principles based on multi-carrier modulation, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

## Brief description of the figures

In the following the invention will be explained further making reference to the attached drawings.

Fig. 1 schematically shows a communication network in which the invention can be implemented.

Fig. 2 schematically shows the structure of a user terminal and a base station in which the invention can be implemented.

Fig. 3 schematically shows an LTE signal structure in uplink with resource elements for data symbols and pilot symbols.

Fig. 4 schematically shows a spectrum of an OFDM signal compared to a block filtered multicarrier signal.

Fig. 5 schematically shows an example of a sequence of 5 physical resource blocks with a first inner part of 54 symbols with CAZAC property and a second outer part of two times 3 symbols for side lobe cancellation according to an embodiment of the invention.

## Description of the embodiments

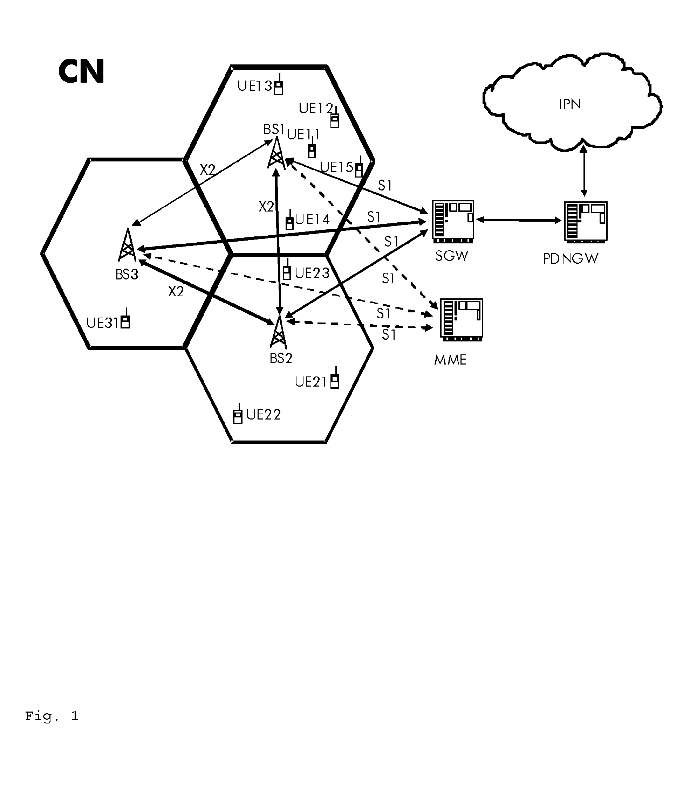

Fig. 1 shows as an example of a communication network in which the invention can be implemented a communication network CN according to the standard 3GPP LTE.

Said communication network CN comprises base stations BS1-BS3, user terminals UE11-UE31, a serving gateway SGW, a packet data network gateway PDNGW, and a mobility management entity MME.

The user terminals UE11-UE15 are connected via radio connections to the base station BS1, the user terminals UE21-UE23 are connected via radio connections to the base station BS2, and the user terminal UE31 is connected via a radio connection to the base station BS3. In future evolutions of LTE, each of the user terminals UE11-UE31 can also be connected via radio connections to multiple of said base stations BS1-BS3.

The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between one of the base stations BS1-BS3, i.e. an eNodeB in this example, and the Evolved Packet Core (EPC). The S1 interface has two flavours, S1-MME for exchange of signaling messages between one of the base stations BS1-BS3 and the mobility management entity MME and S1-U for the transport of user datagrams between one of the base stations BS1-BS3 and the serving gateway SGW.

The X2 interface is added in 3GPP LTE standard primarily in order to transfer the user plane signal and the control plane signal during handover.

The serving gateway SGW performs routing of the IP user data between the base stations BS1-BS3, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal and the respective serving base station BS1-BS3.

The mobility management entity MME performs tasks of the subscriber management and the session management, and also performs the mobility management during handover between different access networks.

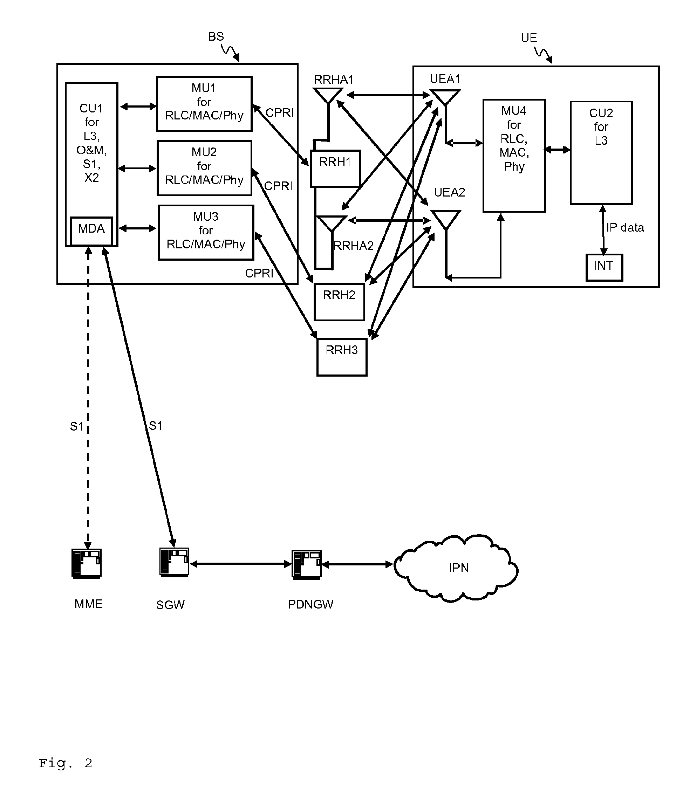

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

In the sequel, first exemplarily an LTE signal structure in uplink with resource elements for data symbols and pilot symbols is described, and then, an example of a sequence of physical resource blocks with a first inner part with CAZAC property and a second outer part for side lobe cancellation according to an embodiment of the invention is disclosed.

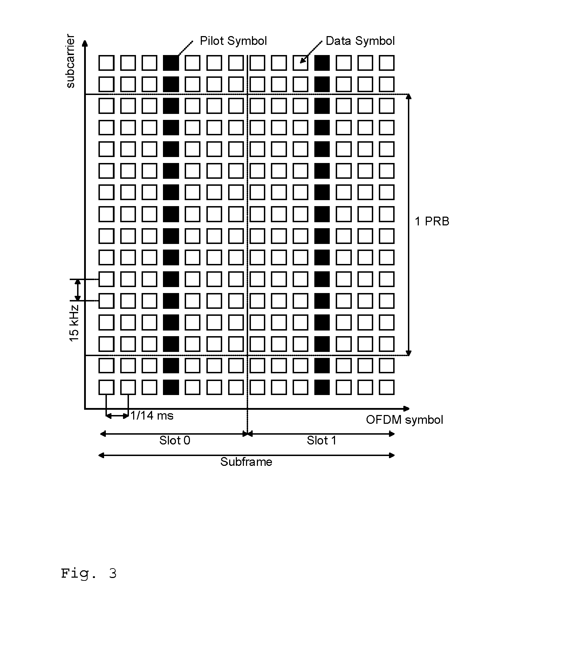

Fig. 3 schematically shows an LTE signal structure in uplink with resource elements for data symbols and pilot symbols.

In fig. 3, 16 subcarriers are depicted for each of the 14 OFDM symbols of a subframe. The subframe is divided in a slot 0 and a slot 1, each of them comprising 7 OFDM symbols. The subcarriers have a frequency distance of 15 kHz, and the OFDM symbols have a time duration of 1/14 ms.

The resource elements used for data symbols are depicted as white squares, whereas the resource elements used for pilot symbols are depicted as dark squares. It can be seen, that the fourth OFDM symbol in each slot of the subframe is used for the transmission of pilot symbols.

LTE and LTE-advanced systems use so-called Zadoff-Chu sequences for the pilot symbols which fulfil the constant-amplitude zero-autocorrelation (CAZAC) property. In the uplink the pilot sequence is allocated on the center OFDM symbols of each slot, on each subcarrier of the user allocation, as depicted in fig. 3.

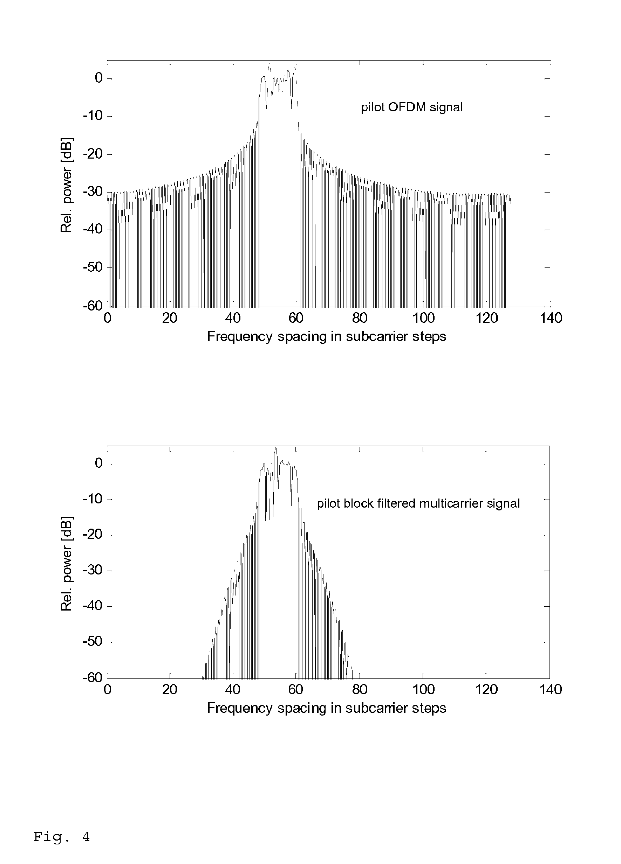

In case two frequency-neighboured users are not perfectly time- or frequency-synchronized, inter-carrier interference (ICI) is generated. For the pilot symbols, this means that sidelobes of the OFDM sine-spectrum are leaking into pilot resource elements of neighbour users. This pilot-ICI reduces channel estimation quality and thus the overall receiver performance. An illustration of the sidelobe levels of one physical resource block is given in figure 4 and will be described in the following.

Fig. 4 schematically shows in an upper diagram a spectrum of a pilot OFDM signal compared to a pilot block filtered multi-carrier signal, also called universal filtered multicarrier signal, depicted in a lower diagram over 120 subcarriers.

Both the pilot OFDM signal and the pilot block filtered multicarrier signal are transmitted in a physical resource block with 12 subcarriers from subcarrier 50 to subcarrier 61.

It can be seen, that the relative power of the sidelobes is not falling under -30 dB in the farthest neighbouring subcarriers 0 and 120 for the pilot OFDM signal, whereas for the pilot block filtered multicarrier signal the relative power of the sidelobes is falling as low as -60 dB already in subcarriers being only 20 subcarrier steps away from the physical resource block used for transmission of the pilot signal.

In the following, embodiments of the invention for reducing or cancelling said sidelobes in neighbouring subcarriers are described. A basic idea of the embodiments is to use a sequence of physical resource blocks with a first inner part, typically located in the frequency center of the allocation, with a desired design property, as e.g. CAZAC property, and a second outer part, typically located at the frequency edges of the allocation, using sequence symbols targeting side lobe cancellation.

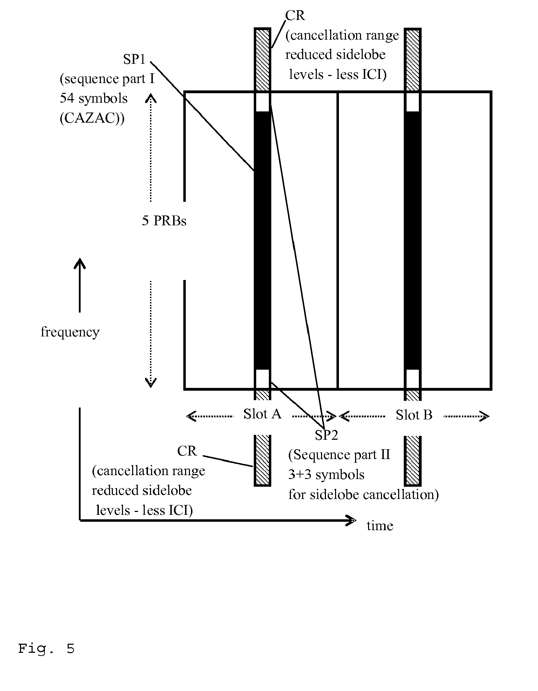

Fig. 5 schematically shows an example of a sequence of 5 physical resource blocks with a first inner part of 54 symbols with CAZAC property and a second outer part of two times 3 symbols for side lobe cancellation according to an embodiment of the invention. Fig. 5 depicts the principle of this embodiment applied to an LTE-advanced uplink example.

Fig. 5 depicts an exemplary user allocation in UL spanning five physical resource blocks (PRBs) in frequency direction and one subframe consisting of slot A and slot B in time direction. In the center of the two slots A and B, the symbols carrying the pilot sequences are shown.

Protection against sidelobes from the pilot sequences is only required between user allocations and at the edge of the overall spectrum to protect frequency adjacent radio systems, but not between PRBs being jointly transmitted by a single user terminal. So, it is sufficient to spent a given number of subcarriers, around 2-3 per side depending on the targeted reduction level, at the edge of the allocation for subcarrier cancellation purposes. Each physical resource block consists of 12 subcarriers, so the complete allocation in fig. 5 spans 60 subcarriers. As at both edges 3 subcarriers are dedicated for sidelobe suppression, 54 subcarriers may be used to carry the CAZAC sequence.

In fig. 5, a pilot sequence part I SP1 which consists of 54 subcarriers and which carries the CAZAC sequence is depicted in black, and a pilot sequence part II SP2 which consists of 3 subcarriers at each edge of the 5 PRBs subcarriers and which is dedicated for sidelobe suppression is depicted in white. The application of sidelobe cancellation subcarriers at the edge of the 5 PRBs leads to reduced sidelobe levels in neighbouring subcarriers in a cancellation range CR, which is schematically depicted as ruled in fig. 5.

A general design method for a sidelobe cancellation technique using dedicated subcarriers is given in the following.

In an OFDM system, the spectrum $y_n(f)$ of a single subcarrier n after filtering with a rectangular pulse shaping filter is given by

$$y_n(f) = d_n \cdot \frac{\sin(\pi(f - f_n))}{\pi(f - f_n)} \, ,$$

with f representing the frequency shifted to the OFDM center frequency and normalized to the sampling frequency, $f_n$ representing the normalized center frequency of the nth subcarrier, and $d_n$ representing the complex symbol of the nth subcarrier.

Superposing the spectra of the subcarriers used for transmission of the symbols $d_n$ leads to a superposition spectrum $y(f)$ according to

$$y(f) = \sum_{-N/2}^{N/2-1} y_n(f) \, ,$$

with N being the overall number of subcarriers used for the transmission. In fig. 5, the pilot sequence part I SP1 corresponds to said N subcarriers, with N being 54 in the embodiment.

For reduction or cancellation of the sidelobes of said superposition spectrum $y(f)$, a number of M subcarriers is used as cancellation symbols, with a number of N+M subcarriers being predefined for usage. Thus, a number of N+M subcarriers which is predefined e.g. for pilot, reference or training sequences is divided into a number of N subcarriers used for transmission of pilot, reference or training symbols, and a number of M subcarriers used for transmission of cancellation symbols for sidelobe reduction or cancellation. Said M subcarriers for sidelobe reduction or cancellation are divided on both edges of the N+M subcarriers. In fig. 5, the pilot sequence part II SP2 corresponds to said M subcarriers, with M being 3+3 symbols on both edges of the 5 PRBs in the embodiment.

The spectrum $z_m(f)$ of a single cancellation subcarrier $m$ is given by

$$z_m(f) = \frac{\sin(\pi(f - g_m))}{\pi(f - g_m)} \, ,$$

with $g_m$ representing the normalized center frequency of the mth cancellation subcarrier.

In a cancellation range comprising L subcarriers adjacent to the N+M subcarriers on both sides, a superposition of the spectra of the m cancellation subcarriers weighted with a weighting factor $w_m$ and the superposition spectrum of the transmitted symbols $d_n$ has to be minimized in order to maximize the sidelobe suppression in the cancellation range comprising said L subcarriers.

Thus, said optimization problem can be seen as a linear least square problem according to

$$\min_{\mathbf{w}} \left\| \mathbf{y} + \sum_{m=1}^{M} w_m \cdot \mathbf{z}_m \right\|^2 ,$$

with $y = [y_1, ..., y_l ..., y_L]^T$ indicating in a vector the L samples of the superposition spectrum of the transmitted symbols $d_n$ at the normalized center frequency of the lth subcarrier in the cancellation range, with $z_m = [z_{m,1}, ..., z_{m,L}]^T$ indicating in a vector the L samples of the mth cancellation subcarrier at the normalized center frequency of the lth subcarrier in the cancellation range, and with $w=[w_1, ..., w_M]^T$ indicating in a vector the complex weighting factors for each cancellation subcarrier. In fig. 5, the cancellation range CR adjacent on both sides of the 5 PRBs corresponds to said L subcarriers.

Thus, the choice of the pilot sequence part II SP2 comprising cancellation symbols is done in such a way, that the sidelobes of the cancellation symbols suppress the sidelobes of the pilot symbols, i.e. of the original pilot transmit signal. That means that the superposition of the spectra of the pilot sequence part II SP2 for cancellation and pilot sequence part I SP1 e.g. for defined autocorrelation properties etc. has to be minimized. This optimization problem can be formulated as a linear least squares problem with quadratic inequality constraint, as described above.

In an alternative of the embodiment, a different constraint for the sequence part II SP2 for cancellation is applied. The sequence part II SP2 cancellation symbols have a constant amplitude and are just phase rotated such that the sidelobe levels of adjacent subcarriers are minimized.

In a further embodiment of the invention, other multicarrier signal formats different to OFDM such as filter bank based multicarriers (FBMC) and generalized frequency division multiplexing symbols (GFDM) are used for the pilot, reference or training sequence part I SP1. GFDM is based on digitally implemented filter banks applying an adjustable filtering and an efficient equalization based on fast Fourier transformation (FFT). FBMC uses filter banks for synthesis and analysis of multicarrier signals with small sidelobes.

One of the key differences between OFDM and schemes relying on filtered subcarriers is the already reduced amount of out-of band radiation due to per subcarrier filtering. To even more improve the robustness against asynchrony at the edges of the allocations sidelobe cancellation subcarriers are included. Due to the inherent lower out-of band radiation of filtered multicarrier systems, the required overhead to be spent for this purpose is lower than with OFDM. In a yet further embodiment, the invention is applied to the so-called block-filtered multi-carrier modulation, which is also called universal filtered multi-carrier modulation and is e.g. described in the paper by V. Vakilian, T. Wild, F. Schaich, S.t. Brink, J.-F. Frigon with the title "Universal-Filtered Multi-Carrier Technique for Wireless Systems Beyond LTE", 9th International Workshop on Broadband Wireless Access (BWA) @ IEEE Globecom'13, Atlanta, GA, USA, December 2013. In contrast to FBMC and GFDM not the single subcarriers, but complete blocks are filtered. This specific signal design leads to stronger decay of sidelobe levels than with OFDM, but subcarrier resource blocks are causing some interference to frequency-neighboured blocks. This can be handled by the sidelobe cancellation approach of the invention. Frequency-neighboured reference sequences according to the invention will then cause reduced cross-talk.

In the embodiments described above and depicted e.g. in fig. 5, the corresponding processing steps can be performed e.g. in the modem unit boards MU1-MU3 and the control unit board CU1 of the base station BS or the user terminal UE as depicted in fig. 2 and described above.

**Claims**

1. A method for allocating at least one of a group of a pilot sequence, a reference sequence, and a training sequence (SP1, SP2) on frequency resources which are predefined for usage of said at least one of the group of the pilot sequence, the reference sequence, and the training sequence (SP1, SP2), wherein

   • said at least one of the group of the pilot sequence, the reference sequence, and the training sequence (SP1, SP2) is composed of at least two parts (SP1, SP2),
   • a first part (SP1) of said at least two parts comprises at least one of a group of pilot symbols, reference symbols, and training symbols,
   • and a second part (SP2) of said at least two parts comprises cancellation symbols located at the edge of said frequency resources for cancellation of sidelobes of said at least one of the group of the pilot sequence, the reference sequence, and the training sequence (SP1, SP2).

2. A method according to claim 1, wherein said frequency resources comprise orthogonal frequency division multiplexing symbols.

3. A method according to claim 1, wherein said frequency resources comprise filter bank based multicarriers.

4. A method according to claim 1, wherein said frequency resources comprise generalized frequency division multiplexing symbols.

5. A method according to claim 1, wherein said frequency resources are block-filtered multicarriers or universal filtered multicarriers.

6. A method according to any of the preceding claims, wherein said first part (SP1) of said at least two parts (SP1, SP2) comprising at least one of a group of pilot symbols, reference symbols, and training symbols has at least one dedicated autocorrelation property.

7. A method according to claim 6, wherein said at least one dedicated autocorrelation property is a constant-amplitude zero-autocorrelation.

8. A method according to claim 7, wherein Zadoff-Chu sequences are used for said first part (SP1) of said at least two parts (SP1, SP2) comprising at least one of a group of pilot symbols, reference symbols, and training symbols.

9. A network device (UE, BS) for allocating at least one of a group of a pilot sequence, a reference sequence, and a training sequence (SP1, SP2) on frequency resources which are predefined for usage of said at least one of the group of the pilot sequence, the reference sequence, and the training sequence (SP1, SP2), wherein said network device (UE, BS) is adapted to

   • compose said at least one of the group of the pilot sequence, the reference sequence, and the training sequence of at least two parts (SP1, SP2),
   • with a first part (SP1) of said at least two parts (SP1, SP2) comprising at least one of a group of pilot symbols, reference symbols, and training symbols,
   • and with a second part (SP2) of said at least two parts (SP1, SP2) comprising cancellation symbols located at the edge of said frequency resources for cancellation of sidelobes of said at least one of the group of the pilot sequence, the reference sequence, and the training sequence (SP1, SP2).

10. A network device according to claim 9, wherein the network device is a base station (BS).

11. A network device according to claim 9, wherein the network device is a user terminal (UE).

12. A communication network (CN) for mobile communication comprising at least one base station (BS) according to claim 10 or a user terminal (UE) according to claim 11.

Fig. 1

Fig. 2

Fig. 3

Fig. 4

CR
(cancellation range
reduced sidelobe
levels - less ICI)

SP1
(sequence part I
54 symbols
(CAZAC))

5 PRBs

frequency

Slot A                    Slot B

SP2
(Sequence part II
3+3 symbols
for sidelobe cancellation)

CR
(cancellation range
reduced sidelobe
levels - less ICI)

time

Fig. 5

| Europäisches Patentamt European Patent Office Office européen des brevets | **EUROPEAN SEARCH REPORT** | Application Number EP 13 30 6556 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BRANDES S ET AL: "Sidelobe suppression in OFDM systems by insertion of cancellation carriers", VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, vol. 1, 28 September 2005 (2005-09-28), pages 152-156, XP010878440, DOI: 10.1109/VETECF.2005.1557490 ISBN: 978-0-7803-9152-9 * Sections I., II. and III., in particular equation (8) * ----- | 1-12 | INV. H04L25/03 H04L27/00 H04L27/26 H04L5/00 |
| X | ZHOU YUAN ET AL: "Cognitive radio-based OFDM sidelobe suppression employing modulated filter banks and cancellation carriers", MILITARY COMMUNICATIONS CONFERENCE, 2009. MILCOM 2009. IEEE, IEEE, PISCATAWAY, NJ, USA, 18 October 2009 (2009-10-18), pages 1-5, XP031609556, DOI: 10.1109/MILCOM.2009.5379927 ISBN: 978-1-4244-5238-5 * Sections I. to IV. * ----- | 1-12 | TECHNICAL FIELDS SEARCHED (IPC) H04L |

The present search report has been drawn up for all claims

| Place of search | Date of completion of the search | Examiner |
|---|---|---|
| Berlin | 10 February 2014 | Chave, Julien |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V. VAKILIAN ; T. WILD ; F. SCHAICH ; S.T. BRINK ; J.-F. FRIGON.** Universal-Filtered Multi-Carrier Technique for Wireless Systems Beyond LTE. *9th International Workshop on Broadband Wireless Access (BWA) @ IEEE Globecom'13, Atlanta, GA, USA,* December 2013